# EUROPÄISCHE PATENTANMELDUNG

(11) **EP 0 852 196 A1**
(43) Veröffentlichungstag der Anmeldung: **08.07.1998**
(21) Anmeldenummer: 97122288.0
(22) Anmeldetag: 17.12.1997
(51) Int. Cl.: B60S 3/00, B60S 3/06

(54) **Dreharmsystem für Waschanlagen**

(30) Priorität: 24.12.1996 DE 19654332; 24.12.1996 DE 29622401 U
(71) Anmelder: Oest, Thorsten, 24941 Flensburg (DE)
(72) Erfinder: Oest, Thorsten, 24941 Flensburg (DE)
(74) Vertreter: Biehl, Christian, Dipl.-Phys.

(57) **Zusammenfassung**

Dreharmsystem für SB-Waschanlagen, mit zwei nebeneinander angeordneten Einheiten (10, 12), die jeweils aus einem an der Decke montierten Drehgelenk (14, 14') und einem an das Drehgelenk (14, 14') angesetzten, einen Hochdruckschlauch (16, 16') führenden Dreharm (18, 18') bestehen, wobei der Abstand der Drehgelenke (14, 14') voneinander kürzer als die Länge der Dreharme (18, 18') ist und die Dreharme (18, 18') derart stumpfwinklig an ihre Drehgelenke (14, 14') angesetzt sind, daß der eine Dreharm (18, 18') unter dem Drehgelenk (14', 14) der anderen Einheit (12, 10) hindurch verschwenkt werden kann, wenn der andere Dreharm (18', 18) von dem einen Drehgelenk (14, 14') weg weisend verschwenkt ist.

## Beschreibung

Die Erfindung betrifft ein Dreharmsystem für SB-Waschanlagen, mit zwei nebeneinander angeordneten Einheiten, die jeweils aus einem an der Decke montierten Drehgelenk und einem an das Drehgelenk angesetzten, einen Hochdruckschlauch führenden Dreharm bestehen.

Derartige Dreharmsysteme finden bei Selbstbedienungs-Waschanlagen Verwendung, bei denen der Führer des Kraftfahrzeugs sein Fahrzeug selbst waschen kann.

Bei komfortableren SB-Waschanlagen sind zwei Dreharmsysteme vorgesehen, wobei das beiden Dreharmsystem mit unterschiedliche Flüssigkeiten beaufschlagt sind und das eine beispielsweise eine Hochdrucklanze und die andere eine Waschbürste versorgt.

Bei den bekannten Dreharmsystemen (z.B. in der DE 44 04 988 A1) ist der Abstand zwischen den beiden an der Decke montierten Drehgelenken größer als die Länge der Dreharme, damit die Dreharme nicht miteinander kollidieren können. Dies hat den Nachteil, daß die Drehgelenke nicht im wesentlichen mittig über dem zu waschenden Fahrzeug angeordnet sind. Die weiter bekannten Systeme mit zwei übereinander auf einer Gelenkachse gelagerten Dreharme (z.B. wie in der US 5.110.049) bauen relativ hoch und setzen eine komplexe Ausgestaltung des Drehgelenks zur Bewirkung der Wasserzufuhr voraus.

Der Erfindung liegt die Aufgabe zugrunde, ein flach bauendes Dreharmsystem für SB-Waschanlagen zu schaffen, bei dem zwei miteinander nicht kollidierende Dreharmeinheiten vorgesehen sind, die jedoch im wesentlichen mittig über dem zu waschenden Kraftfahrzeug angeordnet sind.

Erfindungsgemäß wird diese Aufgabe dadurch gelöst, daß der Abstand der Drehgelenke voneinander kürzer als die Länge der Dreharme ist und die Dreharme derart stumpfwinklig an ihre Drehgelenke angesetzt sind, daß der eine Dreharm unter dem Drehgelenk der anderen Einheit hindurch verschwenkt werden kann, wenn der andere Dreharm von dem einen Drehgelenk weg weisend verschwenkt ist.

Die Drehgelenke sind vorzugsweise mit Kunststoff-Gleitlagern versehen.

Die Erfindung wird im folgenden anhand einer Zeichnung erläutert. Dabei zeigt:

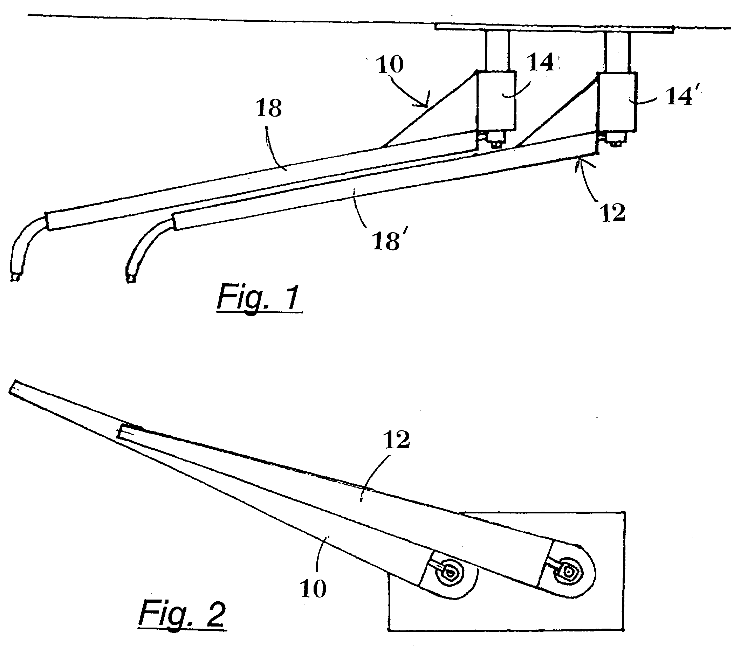

- Fig. 1: eine schematische Seitenansicht auf ein solches Dreharmsystem, und
- Fig. 2: eine Draufsicht auf das System.

Das Dreharmsystem besteht aus zwei Einheiten 10, 12, die jeweils aus einem an der Decke montierten Drehgelenk 14, 14' und einem an das Drehgelenk 14, 14' angesetzen, einen Hochdruckschlauch 16, 16' führenden Dreharm 18, 18' bestehen. Der Abstand der Drehgelenke 14, 14' voneinander ist kürzer als die Länge der Dreharme 18, 18'. Die Dreharme 18, 18' sind derart stumpfwinklig an ihre Drehgelenke 14, 14' angesetzt, das der eine Dreharm 18, 18' unter dem Drehgelenk 14, 14' der anderen Einheit hindurch verschwenkt werden kann.

Der nach unten geneigte Verlauf der Dreharme 18, 18' erlaubt es, die beiden Drehgelenke 14, 14' relativ nahe aneinander anzuordnen, so daß beide im wesentlichen mittig über dem zu waschenden Kraftfahrzeug an der Decke montiert werden können, was den Arbeitsablauf gegenüber einer einseitigen Anordnung erheblich erleichtert.

Ein Kollidieren der beiden Dreharme miteinander dann, wenn beide im wesentlichen in diese Richtung zeigen, wird dadurch vermieden, daß regelmäßig nur einer der beiden Dreharme verwendet wird und in seiner Ruhestellung bei eingehängtem Schlauch 16, 16' nach außen, von der anderen Einheit weg weist.

Es hat sich gezeigt, daß die Verwendung eines Kunststoffgleitlagers eine besonders dauerhafte Ausgestaltung des - im übrigen vorzugsweise aus einem nicht-rostenden Stahl hergestellten - Dreharmsystems gewährleistet, da derartige Kunststoff-Gleitlager gegenüber Feuchtigkeit besonders resistent sind.

Durch eine Verstellbarkeit des stumpfen Winkels mit dem die Dreharme an ihre Drehgelenke 14, 14' angesetzt sind, wird es möglich, das Dreharmsystem an wechselnde Abstände der Drehgelenke 14, 14' zueinander anzupassen, so daß für enge Montage wie für weiter voneinander beabstandete Montage Vorsorge getroffen ist. Dabei können verschiedenartige Hülsen oder auch Spindeltriebe verwandt werden.

Auch durch Variation der jeweiligen Länge des Drehgelenks 14 kann dieser Effekt erzielt werden.

## Patentansprüche

1. Dreharmsystem für SB-Waschanlagen, mit zwei nebeneinander angeordneten Einheiten (10, 12), die jeweils aus einem an der Decke montierten Drehgelenk (14, 14') und einem an das Drehgelenk (14, 14') angesetzten, einen Hochdruckschlauch (16, 16') führenden Dreharm (18, 18') bestehen,
dadurch gekennzeichnet, daß
der Abstand der Drehgelenke (14, 14') voneinander kürzer als die Länge der Dreharme (18, 18') ist und die Dreharme (18, 18') derart stumpfwinklig an ihre Drehgelenke (14, 14') angesetzt sind, daß der eine Dreharm (18, 18') unter dem Drehgelenk (14', 14) der anderen Einheit (12, 10) hindurch verschwenkt werden kann, wenn der andere Dreharm (18', 18) von dem einen Drehgelenk (14, 14') weg weisend verschwenkt ist.

2. Dreharmsystem nach Anspruch 1, dadurch gekennzeichnet, daß die Drehgelenke mit Kunststoff-Gleitlagern versehen sind.
